# DEMANDE DE BREVET EUROPEEN

(11) **EP 1 521 442 A1**
(43) Date de publication de la demande: **06.04.2005**
(21) Numéro de dépôt: 03103670.0
(22) Date de dépôt: 03.10.2003
(51) Int. Cl.: H04M 3/533

(54) **Paramétrage du message d'accueil d'une boite vocale par un message multimedia**

(71) Demandeur: CEGETEL, 92915 Paris La Défense Cedex (FR)
(72) Inventeur: MARSOT, Rodolphe, 38000, GRENOBLE (FR)
(74) Mandataire: Schmit, Christian Norbert Marie

(57) **Abrégé**

Un utilisateur produit (301) un message d'accueil vocal et/ou vidéo sur un appareil doté de moyens d'enregistrement d'un tel message. Ce message est encapsulé (302) dans un message multimédia de configuration. Ce message de configuration comporte aussi un identifiant d'un utilisateur. Ce message de configuration est envoyé (303) à un serveur de message d'accueil qui utilise l'identifiant et le message d'accueil du message de configuration pour mettre à jour (307) une base de données du serveur.

## Description

L'invention a pour objet un procédé de paramétrage du message d'accueil d'une boîte vocale.

Le domaine de l'invention est celui de la téléphonie et des messageries vocales. Plus particulièrement le domaine de l'invention est celui des répondeurs vocaux permettant de prendre les messages d'utilisateurs appelants lorsque les utilisateurs appelés, abonnés à un service de messagerie, ne sont pas joignables.

Un but de l'invention est de permettre à un utilisateur de paramètrer / configurer son message d'accueil en optimisant le temps de connexion d'un terminal au réseau.

Un autre but de l'invention est de permettre l'enrichissement de messages vocaux par des informations de type image, vidéo, et/ou texte.

Dans l'état de la technique on connaît des services de messagerie vocale tels que ceux proposés par les opérateurs de téléphonie mobile. Lorsqu'un abonné à l'opérateur de téléphonie mobile n'est pas joignable, un utilisateur appelant cherchant à joindre l'utilisateur injoignable est automatiquement connecté à une boîte vocale. Cette boîte vocale diffuse alors un message d'accueil, diffusion après laquelle l'utilisateur appelant peut enregistrer un message. La connexion à cette boîte vocale se fait forcément par un appareil de téléphonie, qu'il soit fixe ou mobile.

Le message d'accueil est la plupart du temps personnalisable par les utilisateurs abonnés à l'opérateur de téléphonie proposant le service de messagerie vocale. Cette personnalisation est faite par chaque utilisateur abonné. Pour personnaliser son message d'accueil de boîte vocale, un utilisateur établit une connexion, via le réseau de téléphonie, avec sa boîte vocale. Une fois la connexion établie, l'utilisateur doit en général utiliser le clavier de son téléphone pour indiquer au serveur de messagerie qu'il souhaite paramètrer sa boîte vocale. Le serveur passe alors dans un mode d'enregistrement. L'utilisateur peut alors énoncer son message d'accueil qui est enregistré par le serveur. Une fois l'enregistrement terminé, l'utilisateur appuie sur une touche, ce qui signifie qu'il a fini son message d'accueil. Le serveur diffuse alors, via le réseau de téléphonie, et vers l'utilisateur, le message d'accueil que l'utilisateur vient d'énoncer. Cela permet à l'utilisateur de se rendre compte de la pertinence de son message d'accueil. Si l'utilisateur est satisfait il coupe la connexion vocale avec le serveur de messagerie, sinon, il provoque, via le clavier de son terminal, l'enregistrement d'un autre message d'accueil.

Ce type d'interface avec le serveur de messagerie vocale présente plusieurs problèmes. Un premier problème est l'obligation d'utiliser un terminal de téléphonie compatible avec le serveur de messagerie auquel l'utilisateur est abonné.

Un autre problème est que le type des données transmises vers le serveur de messagerie vocale est limité par les capacités d'acquisition, et de transmission instantanée, de l'appareil utilisé pour effectuer la personnalisation du message d'accueil de la boîte vocale. Dans l'état de la technique le paramétrage se fait selon une connexion en mode vocal, les seules informations transmissibles sont alors la voix de l'utilisateur et éventuellement, si le terminal utilisé le gère, des tons selon le mode DTMF. En particulier, il est impossible de transmettre du texte ou de l'image qu'elle soit fixe ou animée.

Encore un autre problème est que durant l'enregistrement du message d'accueil et sa validation, le terminal est connecté au serveur de messagerie vocale. Cette connexion accapare des ressources réseau qui ne peuvent plus être allouées à d'autres utilisateurs souhaitant effectuer un appel standard. Cela empêche aussi l'utilisateur de recevoir un appel d'une personne souhaitant le joindre, à un moment où de plus, sa boîte vocale n'est pas correctement paramètrée, donc pas en mesure de recevoir des messages vocaux. Ce problème est d'autant plus critique qu'un message, hors sa procédure d'enregistrement, peut durer une minute ou plus et que la première tentative d'enregistrement est rarement la bonne. Il est donc fréquent d'utiliser une dizaine de minutes ou plus pour personnaliser sa boîte vocale, ce qui est préjudiciable à la fois à l'utilisateur et à l'opérateur. Les ressources dont il est question ici sont principalement les ressources de communications vocales et de données à l'exclusion des ressources de signalisations et de gestion du réseau. Pour ces dernières ressources, le problème existe mais est moins important.

L'invention résout ces problèmes en effectuant la personnalisation d'une messagerie, ou boîte, vocale via un message multimédia pré-formaté de type MMS (Multimedia Messaging Service, pour service de messagerie multimédia). L'utilisateur produit un message au format prédéfini sur un appareil qui peut être un terminal de téléphonie mobile, un ordinateur individuel, ou un autre type d'appareil. Cet appareil comporte un programme permettant à l'utilisateur de produire le message pré-formaté en y incluant tous les éléments préalablement prévus. Ces éléments comportent au moins un identifiant de l'utilisateur, et des données de voix correspondant au message d'accueil. Ces éléments sont insérés dans un message MMS qui est envoyé, via par exemple Internet, au serveur de messagerie vocale. L'envoi peut aussi être fait à un serveur apte à paramètrer le serveur de messagerie vocale. Dans l'invention les ressources du réseau ne sont sollicitées que pour la transmission du message de personnalisation, et après la production du message d'accueil par l'utilisateur. On peut donc employer des procédés de compression, pour le message d'accueil, diminuant encore la sollicitation des ressources de communication du réseau. De même on peut incorporer dans le message de personnalisation des données d'images fixes ou animées. A la réception d'un message de personnalisation, le serveur de messagerie vocale extrait de ce message les informations dont il a besoin pour se paramètrer selon les desiderata de l'utilisateur.

L'invention a donc pour objet un procédé de paramétrage du message d'accueil d'une boîte vocale caractérisé en ce qu'il comporte les étapes suivantes:
- un utilisateur enregistre, sur un terminal, un message d'accueil,
- on compresse, sur le terminal, le message d'accueil,
- on produit, sur le terminal, un message multimédia comportant le message d'accueil compressé,
- le message multimédia comporte un champ instruction pour indiquer qu'il s'agit d'un message d'accueil,
- on émet, depuis le terminal, le message multimédia vers un serveur de message d'accueil.

L'invention a aussi pour objet un procédé de paramétrage du message d'accueil d'une boîte vocale caractérisé en ce qu'il comporte les étapes suivantes:
- on reçoit, sur un serveur de message d'accueil, un message multimédia comportant un champ instruction indiquant que le message multimédia est un message de mise à jour de message d'accueil,
- on détermine, sur le serveur de message d'accueil, l'émetteur du message multimédia,
- on extrait, sur le serveur de message d'accueil, le message d'accueil,
- on enregistre, dans une base de données, le message d'accueil en le faisant correspondre, dans la base de donnée, à l'émetteur du message multimédia.

L'invention sera mieux comprise à la lecture de la description qui suit et à l'examen des figures qui l'accompagnent. Celles ci sont présentées à titre indicatif et nullement limitatif de l'invention. Les figures montrent:
Figure 1: une illustration de moyens utilisables pour la mise en oeuvre du procédé selon l'invention.
Figure 2: une illustration d'un message de personnalisation selon l'invention.
Figure 3: une illustration d'étapes du procédé selon l'invention.

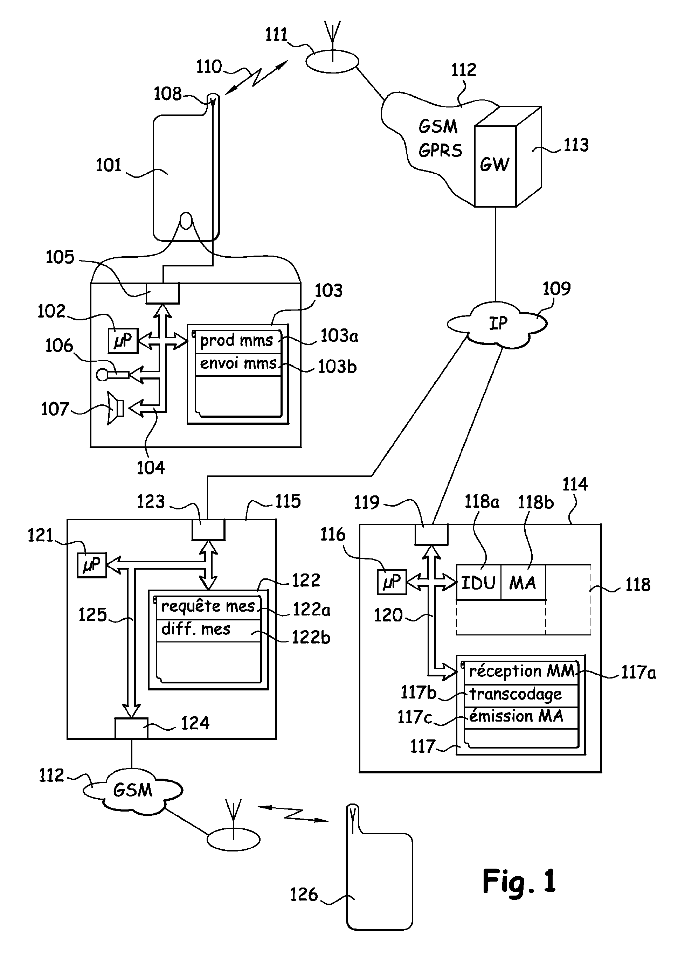

La figure 1 montre un appareil 101 qui dans notre exemple est un téléphone mobile. Dans la pratique l'appareil 101 pourrait être un ordinateur personnel, un assistant personnel électronique ou tout appareil susceptible de se connecter à un serveur de message d'accueil pour lui envoyer un message de personnalisation.

Le téléphone 101 comporte au moins un microprocesseur 102 et une mémoire 103 de programme. La mémoire 103 de programme comporte plusieurs zones, chaque zone comportant des codes instructions permettant la mise en oeuvre d'une fonctionnalité de l'appareil 101. Ces codes instruction sont interprétés par le microprocesseur 102. Ainsi, lorsque l'on prête une action à un appareil, celle-ci est réalisée par un microprocesseur de l'appareil, ledit microprocesseur exécutant des codes instruction enregistrés dans une mémoire de programme de l'appareil.

La mémoire 103 comporte une zone 103a comportant des codes instruction pour la production d'un MMS selon l'invention, et une zone 103b comportant des codes instructions pour l'émission d'un message MMS. La mémoire 103 et le microprocesseur 102 sont connectés via un bus 104.

Le téléphone 101 comporte aussi des circuits 105 d'interface entre le bus 104 et une antenne 108 du téléphone 101. Le téléphone 101 comporte aussi un microphone 106 et un haut-parleur 107. Les moyens 105 à 107 sont connectés au bus 104. Les moyens 106 et 107 sont des moyens classiques d'un téléphone mobile, ils ne sont représentés que pour illustrer le fait qu'un téléphone mobile comporte tous les moyens permettant l'acquisition et la restitution de sons.

Classiquement, le téléphone 101 est capable de se connecter à un réseau 109 de type Internet via une connexion 110 hertzienne entre l'antenne 108 et une station 111 de base. La station de base 111 appartient à l'infrastructure d'un réseau 112 GSM / GPRS (ou UMTS) comportant une passerelle 113 entre le réseau 112 et le réseau 109. Cette passerelle est typiquement une passerelle WAP.

Via le réseau 109 il est aussi possible de joindre un serveur 114 de message d'accueil, et un serveur 115 de messagerie vocale. Pour la description nous avons séparé les fonctionnalités de serveur de messages d'accueil et de serveur vocal en les répartissant sur deux appareils. Dans la pratique il pourrait n'y avoir qu'un seul appareil mettant en oeuvre les deux fonctionnalités.

Le serveur 114 comporte un microprocesseur 116, une mémoire 117 de programme, une mémoire 118 de message d'accueil, et des circuits 119 d'interface avec le réseau 109. Les éléments 116 à 119 sont connectés via un bus 120.

La mémoire 117 comporte au moins une zone 117a comportant des codes instruction pour la réception de messages multimédia, une zone 117b comportant des codes instructions pour le transcodage des messages multimédia, et une zone 117c pour l'émission de message d'accueil. Le transcodage d'un message multimédia consiste a extraire les différentes composantes multimédia du message.

La mémoire 118 est une table divisée en lignes et en colonnes. Chaque ligne correspond à un utilisateur identifié par un identifiant enregistré dans la colonne 118a. A chaque identifiant correspond alors un message d'accueil enregistré dans une colonne 118b. La mémoire 118 peut comporter d'autres colonnes permettant d'associer d'autres informations (image, vidéo, carte de visite...) à un utilisateur. La mémoire 118 illustre le fait que le serveur 114 comporte des moyens pour associer des informations, dont un message d'accueil, à un identifiant d'utilisateur.

Le serveur 115 comporte au moins un microprocesseur 121, une mémoire 122 de programme, des circuits 123 d'interface avec le réseau 109 et des circuits 124 d'interface avec le réseau 112. Les éléments 121 à 124 sont connectés via un bus 125.

La mémoire 122 comporte au moins une zone 122a comportant des codes instructions pour obtenir un message d'accueil, et une zone 122b comportant des codes instructions pour diffuser un message d'accueil. Le message d'accueil est diffusé à une personne P cherchant à joindre l'utilisateur du téléphone 101 à un moment où le téléphone 101 ne peut pas être joint. La personne P, utilisant un téléphone 126 se retrouve alors connectée sur le serveur 115 de messagerie vocale.

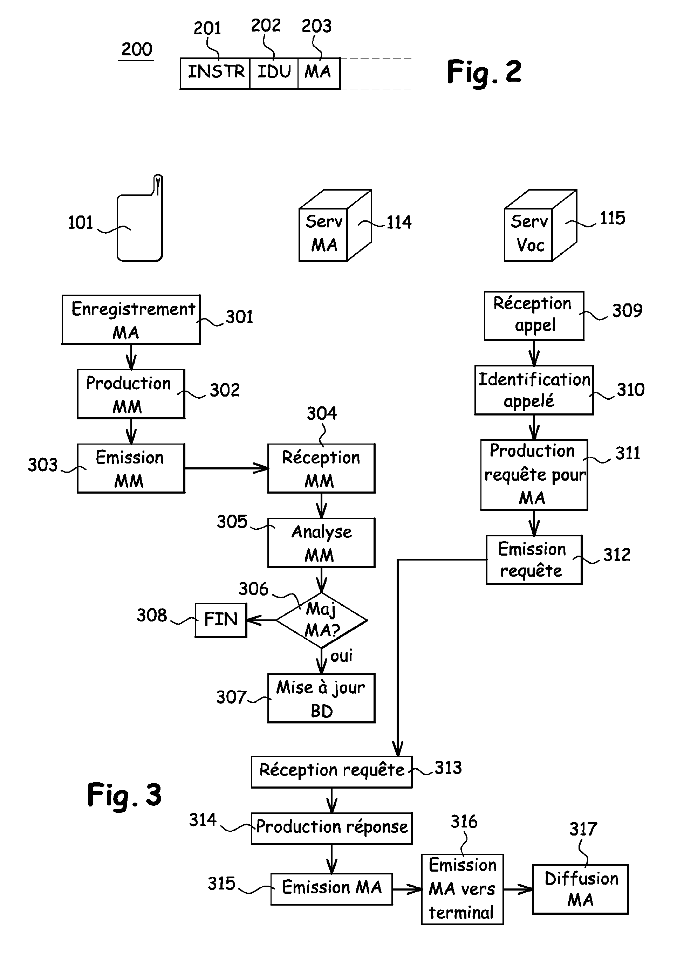

La figure 2 illustre une structure possible pour un message de personnalisation / configuration selon l'invention. Un tel message 200 comporte un champ 201 d'instruction permettant d'identifier le message comme étant un message de personnalisation, un champ 202 permettant d'identifier à la fois une personne et une boîte vocale à personnaliser et un champ 203 comportant le message d'accueil. Cette structure est connue de tous les appareils partis à la personnalisation, ce qui permet de correctement interpréter les champs. Un solution possible pour la détermination des champs est de définir un séparateur de champs, ou d'utiliser des champs de longueur fixe et connue, ou d'utiliser un balisage tel que prescrit par la recommandation MMS mettant en oeuvre la syntaxe XML (eXtended Language Markup, pour langage de balisage étendu).

### Exemple de message de personnalisation

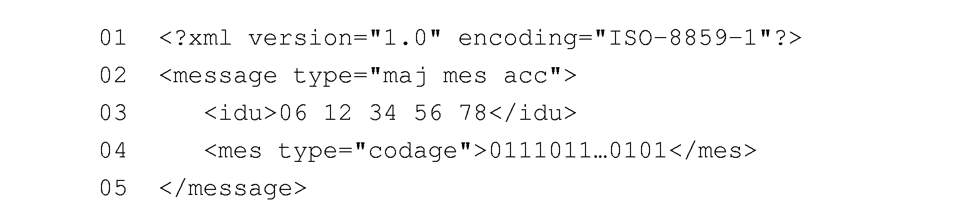

L'exemple ci-dessus illustre une syntaxe possible dans le cadre d'une mise en oeuvre utilisant le mode XML. La ligne 01 de l'exemple correspond à une spécificité de la norme XML. La ligne 02 définit un message dont le type est "maj mes acc", il s'agit d'un code instruction, correspondant au champ 201, indiquant qu'il s'agit d'un message de mise à jour d'un message d'accueil. La ligne 03 correspond au champ 202 identifiant l'utilisateur dont le message d'accueil doit être mis à jour. La ligne 04 correspond au message d'accueil compris entre deux balises, le type de codage étant spécifié dans la balise ouvrante. La ligne 05 est la balise fermante, selon la syntaxe XML, correspondant à la ligne 02. On note que la syntaxe XML de l'exemple est indicative, aussi bien le nom des balises, que l'indentation du texte, et les informations de type pourraient être positionnées et nommées différemment. De même la syntaxe XML / MMS n'est pas la seule possible, on connaît aussi les syntaxes SGML, HTML, ou autres syntaxes ou structures binaires permettant d'instancier des champs.

Dans une variante un message de mise à jour du message d'accueil peut contenir d'autres informations que celles utiles à la mise à jour du message d'accueil. De telles informations peuvent être une photo de l'utilisateur, ou des informations de paramétrage général de l'abonnement de l'utilisateur. Dans ce cas c'est le message de mise à jour / configuration du message d'accueil qui est compris dans un message de configuration générale comportant au moins les champs décrits pour la figure 2.

La figure 3 montre une étape 301 préliminaire au cours de laquelle l'utilisateur du téléphone 101 utilise un appareil pour produire un message d'accueil. Dans notre exemple on considère que l'appareil est le téléphone 101, dans la pratique il pourrait s'agir d'un ordinateur individuel, un assistant personnel, ou de tout autre appareil doté de capacité d'enregistrement. Au cours de l'étape 301 l'utilisateur enregistre un message via le micro 106. Ce message est enregistré dans une mémoire du téléphone 101 sous la forme d'un fichier son. Le format de ce fichier son est de préférence compressé par exemple en MP3, ou autre MPEG. Dans une variante, ce fichier peut très bien être un fichier vidéo. Pour pouvoir produire un fichier vidéo, il faut que le téléphone 101 soit connecté à une caméra ou comporte une caméra. Une fois ce fichier audio produit, on passe à une étape 302 de production du message multimédia.

Dans l'étape 302 le téléphone 101 met en forme les informations relatives à la mise à jour d'un message d'accueil. Cela revient à produire un message ayant la structure décrite pour la figure 2, et / ou la structure décrite pour l'exemple de syntaxe XML. Le code instruction utilisé pour renseigner le champ 201 est prédéfini, et compris, par exemple, dans les codes instruction de la zone 122a. L'identifiant utilisateur est, par exemple, un numéro de téléphone. Celui-ci est soit saisi au cours de l'étape 302 par l'utilisateur du téléphone 101, soit lu automatiquement dans une carte SIM du téléphone 101, soit mis à jour automatiquement par le réseau. Le champ 203 est quand à lui renseigné à partir du fichier son (vidéo) produit à l'étape 301. On obtient ainsi un message de configuration d'une boîte vocale. L'étape 302 est suivie d'une étape 303 d'émission du message de configuration / mise à jour.

Dans l'étape 303, le message 200 multimédia, produit à l'étape 303, est encapsulé dans un message selon un protocole dit de transport. Un tel protocole est, par exemple, TCP/IP, HTTP, ou FTP... Ce message de transport comporte au moins, en plus du message 200 de mise à jour, une adresse d'un destinataire. Dans notre exemple ce destinataire est le serveur 114 de message d'accueil joint via le réseau 109 Internet. Le message de transport est acheminé via le réseau 112, la passerelle 113 et le réseau 109 Internet. L'adresse du serveur 114 est obtenue de façon classique, soit car elle est codée dans la zone 103b, ou une autre zone mémoire du téléphone 101, soit par résolution d'adresse de type DNS. Il existe d'autres protocoles de transport comme UDP ou X25 permettant d'envoyer un message de configuration depuis le téléphone 101 vers le serveur 114. On note que, dans une variante, le téléphone 101 met à jour, durant l'étape 303, le champ 202 en fonction d'un identifiant communiqué par le réseau 112. Cette mise à jour peut aussi être effectuée par le serveur 113 qui fait partie du réseau 112.

Dans l'étape 304, le serveur 114 reçoit un message de transport. Le serveur 114 débarrasse ce message des couches d'information correspondant au protocole de transport employé et obtient un message de configuration tel que celui décrit pour la figure 200 et / ou l'exemple de syntaxe XML. On passe alors à une étape 305 d'analyse d'un message multimédia.

Dans l'étape 305, le serveur 114 a accès aux champs du message 200. Le serveur 114 peut dès lors déterminer la nature du message reçu via le message de transport. Dans une étape 306, suivant l'extraction de la nature à l'étape 305, le serveur 114 analyse la valeur du champ 201 pour déterminer si le message qu'il vient de recevoir est un message de mise à jour. Les valeurs possibles pour le champ 201 sont prédéfinis selon les différents types de messages que peut traiter le serveur 114. De telles valeurs sont soit numériques, soit alphanumériques, soit tout simplement binaires.

Dans l'étape 306 on compare donc la valeur lue à l'étape 305 pour le champ 201 à une liste de valeurs attendues par le serveur 114 pour le champ 201. Si la valeur lue correspond à la valeur du code instruction de mise à jour du message d'accueil, on passe à une étape 307 de mise à jour, sinon on passe à une étape 308 de FIN.

Dans l'étape 308, le serveur poursuit ses opérations de traitement du message qui ne concernent plus les messages selon l'invention.

Dans l'étape 307, le serveur 114 recherche dans la mémoire 118 la ligne dont la valeur de la colonne 118a correspond à la valeur du champ 202 du message de configuration reçu à l'étape 304. Une fois cette ligne trouvée, le serveur substitue le contenu numérique de la colonne 118b de cette ligne par le contenu numérique du champ 203 de message reçu à l'étape 304. Si la ligne n'est pas trouvée, alors elle est soit créée, soit le message de mise à jour est ignoré.

Il est possible que le format du message d'accueil enregistré dans la mémoire 118 ne soit pas le même que celui utilisé pour le champ 203. Ce format est facultativement spécifié dans le champ 203 comme vu pour l'exemple XML. Cela permet au serveur d'effectuer, le cas éventuel, un transcodage avant d'enregistrer le nouveau message d'accueil dans la mémoire 118. On note ici que la mémoire 118 est une représentation simplifiée d'une base de données.

Dans la variante dans laquelle le message 200 fait partie d'un message de configuration générale tout ce passe comme précédemment décrit pour les étapes 304 à 307, si ce n'est que le message comportant d'autres informations, d'autres zones de la mémoire 118 sont mises à jour.

Dans une autre variante, il est possible qu'un utilisateur possède plusieurs messages d'accueil utilisés selon les circonstances, ou la personne appelant. Dans ce cas un message de configuration comporte autant de champ du type 203, ou de lignes 4 de l'exemple XML, que de message d'accueil à configurer. Chaque message d'accueil est alors accompagné d'une information spécifiant sa particularité et permettant au serveur 114 de le stocker correctement en vue d'une réutilisation ultérieure pertinente.

La figure 3 montre une étape 309 de réception d'un appel par le serveur 115 de messagerie vocale. Cette situation se produit soit lorsqu'un abonné est injoignable, soit lorsque quelqu'un appelle directement une boîte vocale. On considère dans notre exemple, l'appel émis depuis le téléphone 126 vers le téléphone 101 qui est alors injoignable.

De l'étape 309, on passe à une étape 310 d'identification de l'appelé par le serveur 115. Cette identification est aisée car une communication est toujours acheminée via un protocole permettant d'identifier celui qui est appelé, en général, il s'agit de son numéro de téléphone. Cet identifiant est aussi transmis au serveur de messagerie vocale qui doit être capable d'attribuer aux abonnés les messages laissés par les utilisateurs se connectant au serveur 115. Le serveur 115 est donc en possession d'un identifiant de l'appelé, classiquement son numéro de téléphone. On passe alors à une étape 311 de production d'une requête, appelée ici message R, pour obtenir le message d'accueil correspondant à l'appelé.

Dans l'étape 311; le serveur 115 produit le message R de requête comportant un code instruction indiquant qu'il s'agit d'une demande pour obtenir un message d'accueil, et d'un identifiant I d'utilisateur. Dans une variante, le message R comporte aussi un champ pour identifier l'appelant. Une fois ce message R produit, il est émis, dans une étape 312 et via un protocole de transport, vers le serveur 114.

Dans une étape 313, le serveur 114 reçoit le message émis à l'étape 312. Le serveur 114 débarrasse ce message des informations de transport et obtient le message R. Le serveur 114 identifie ce message R grâce au champ code instruction que comporte le message R. On passe alors à une étape 314 de production d'une réponse au message R.

Dans l'étape 314, le serveur 114 parcourt la mémoire 118 et en particulier la colonne 118a à la recherche de l'identifiant I du message R. Une fois la ligne correspondant à l'identifiant I trouvée, le serveur 114 utilise le contenu numérique de la colonne 118b pour produire une réponse au message R. Ce contenu numérique est un message d'accueil. La réponse RR au message R comporte donc au moins ce message d'accueil trouvé. La réponse RR comporte aussi un champ II identique au champ I permettant de déterminé l'appartenance du message d'accueil. Le rôle du champ II est de permettre au serveur 115 d'associer la réponse RR au message R. La réponse R peut aussi comporter un code instruction indiquant le type de la réponse RR qui est une réponse à une demande de message d'accueil.

Le message R peut comporter plus d'informations permettant de déterminer le message d'accueil pertinent dans le cas ou l'abonné appelé aurait prévu plusieurs messages d'accueil. Le message d'accueil pertinent peut aussi être déterminé en fonction de l'heure à laquelle est reçu le message R.

La réponse RR produite, elle est envoyée, dans une étape 315, vers le serveur 115. Le protocole de transport utilisé pour cet envoi est de préférence le même que celui utilisé pour l'envoi du message R. L'émission de la réponse RR se fait donc via le réseau 109. Dans la pratique les communications entre les serveurs 114 et 115 peuvent très bien être réalisées via un réseau privé et/ou utilisant d'autres technologies que les technologies utilisées sur Internet. On cite par exemple des réseaux locaux, les connexions directes via un port USB, les réseaux sans fil, et la liste n'est pas exhaustive. Dans une variante, les serveurs 114 et 115 sont un seul et même appareil, dans ce cas il n'est nul besoin de les faire communiquer entre eux car le serveur unique comporte alors le contenu des mémoires 117, 118 et 122.

Dans une étape 316, le serveur 115 reçoit la réponse RR. Le serveur 115 est alors en possession d'un message d'accueil qu'il peut envoyer vers le téléphone 126. Cet envoi se fait de préférence de manière classique, à savoir que le message d'accueil est décompressé par le serveur 115 et diffusé de manière acoustique vers le téléphone 126. Dans une variante, le message d'accueil est envoyé comme un fichier son vers le téléphone 126 qui a alors la charge à la fois de sa décompression et de son rendu acoustique.

Dans une étape 317 le téléphone 126, connecté au serveur 115, reçoit de ce serveur des informations correspondant à un message d'accueil. Ces informations sont traitées par le téléphone 126 et diffusées de manière acoustique via un haut-parleur de ce téléphone.

Dans la description on a jusqu'à présent considéré que l'appareil 101 est un téléphone mobile. Dans la pratique on peut aussi utiliser un ordinateur personnel capable d'enregistrer un fichier son, c'est-à-dire doté d'un microphone, et capable de mettre en oeuvre un programme de composition d'un message multimédia à partir du fichier son. Ce programme de composition correspond aux codes instructions de la zone 103a. Le même ordinateur doit aussi être connecté à Internet pour pouvoir émettre le message composé vers le serveur 114. On cite un ordinateur personnel, mais n'importe quel ordinateur de poche ou assistant personnel fait l'affaire.

## Revendications

1. Procédé de paramétrage du message d'accueil d'une boîte vocale **caractérisé en ce qu'**il comporte les étapes suivantes:
- un utilisateur enregistre (301) hors connexion, sur un terminal, un message d'accueil,
- on compresse (302), sur le terminal, le message d'accueil,
- on produit (302), sur le terminal, un message multimédia comportant le message d'accueil compressé,
- le message multimédia comporte un champ (201) instruction pour indiquer qu'il s'agit d'un message d'accueil,
- on émet (303), depuis le terminal, le message multimédia vers un serveur de message d'accueil.

2. Procédé selon la revendication 1, **caractérisé en ce que** le message multimédia est formaté selon un langage de type XML.

3. Procédé selon l'une des revendications 1 ou 2, **caractérisé en ce que** le message multimédia comporte un champ (202) identifiant de l'utilisateur produisant le message d'accueil.

4. Procédé selon l'une des revendications 1 à 3, **caractérisé en ce que** le message multimédia comporte une information de format pour le message d'accueil.

5. Procédé de paramétrage du message d'accueil d'une boîte vocale **caractérisé en ce qu'**il comporte les étapes suivantes:
- on reçoit (304), sur un serveur de message d'accueil, un message multimédia comportant un champ instruction indiquant que le message multimédia est un message de mise à jour de message d'accueil,
- on détermine (305-306), sur le serveur de message d'accueil, l'émetteur du message multimédia,
- on extrait (307), sur le serveur de message d'accueil, le message d'accueil,
- on enregistre (307), dans une base (118) de données, le message d'accueil en le faisant correspondre, dans la base de données, à l'émetteur du message multimédia.

6. Procédé selon la revendication 5, **caractérisé en ce qu'**on transcode le message d'accueil, avant enregistrement, en fonction du format utilisé par le serveur de message d'accueil et en fonction d'une information de format comprise dans le message multimédia.

7. Procédé selon l'une des revendications 5 ou 6, **caractérisé en ce que**:
- un utilisateur se connecte, via un terminal (126), à une messagerie vocale d'un serveur (115) vocal,
- on émet (312) , depuis le serveur vocal, une requête, vers le serveur de message d'accueil, la requête comportant un identifiant d'utilisateur appelé,
- on émet (315), depuis le serveur de message d'accueil et vers le serveur vocal, le message d'accueil de la base de données correspondant à l'identifiant d'utilisateur appelé,
- on émet (316), depuis le serveur vocal et vers le terminal, le message d'accueil,
- on diffuse (317) de manière acoustique, sur le terminal, le message d'accueil.

8. Procédé selon l'une des revendications 1 à 7, **caractérisé en ce que** le terminal est un téléphone mobile.

9. Procédé selon l'une des revendications 1 à 7, **caractérisé en ce que** le terminal est un ordinateur.
